# EUROPEAN PATENT SPECIFICATION

(11) **EP 3 691 082 B1**
(45) Date of publication and mention of the grant of the patent: **11.11.2026**
(21) Application number: 19177812.5
(22) Date of filing: 03.06.2019
(51) Int. Cl.: H02J 9/06, H02J 1/10

(54) **UNINTERRUPTIBLE POWER SUPPLY WITH DC OUTPUT**
UNTERBRECHUNGSFREIE STROMVERSORGUNG MIT GLEICHSTROMAUSGABE
ALIMENTATION SANS COUPURE AVEC SORTIE CC

(30) Priority: 01.02.2019 CN 201910101871
(43) Date of publication of application: 05.08.2020
(73) Proprietor: Delta Electronics, Inc., Taoyuan County 32063 (TW)
(72) Inventor: CHENG, Chung-Chieh, 32063 Taoyuan City (TW)
(74) Representative: 2K Patent Partnerschaft mbB

(56) References cited:
- EP-A2- 0 696 831
- WO-A2-2008/086340
- US-A1- 2002 071 292
- US-A1- 2008 179 956
- US-A1- 2015 115 711

## Description

### BACKGROUND

### Technical Field

The present disclosure relates to a power supply with DC output, and more particularly in particular to an uninterruptible power supply with DC output that each output thereof may be arbitrarily adjusted and has an uninterruptible power supply function.

### Description of Related Art

The statements in this section merely provide background information related to the present disclosure and do not necessarily constitute prior art.

In general, the conventional power supplies are typically configured to correspond to the power (or voltage, current) required by each electronic device. Due to the increasing variety of electronic products used by modern people, related companies have developed power supplies with multiple output ports, allowing users to use multiple types and multiple numbers of the electronic devices simultaneously through only one mains input port, thereby achieving a one-input-to-multiple-output power supply architecture.

However, in the actual use of the power supply with multiple output ports, since it is necessary to adapt to various needs, if each of the output ports cannot arbitrarily adjust the output-related electrical values according to the use's requirement, the number of output ports would be difficult to reduce, not only it is bulky so it is not easy to carry, but also the production cost is higher. In addition, the conventional power supply cannot protect the safety of the plurality of loads connected to it in the event of sudden abnormal supply situation of the mains, especially for electronic devices such as computer hosts, monitoring systems, precision electronic instruments, and medical instruments, etc. When the mains supply is interrupted, the electronic devices are likely to cause internal parts damage or data loss due to sudden power interruption, which may cause serious and irreversible consequences.
EP0696831A2 discloses a modular power supply system for providing a multiplicity of output voltages from a plurality of respective converter modules. Each of the converter modules has an input coupled to a DC high voltage bus from which a respective output voltage is generated. The voltage supplied on DC bus is generated by a power factor corrected boost converter circuit which is coupled to an AC input source. Further, a battery backup module is coupled to the high voltage DC bus for supplying backup power whenever the bus voltage drops below a predetermined level.
WO2008/086340A3 discloses an apparatus for providing an uninterruptible power supply for an electronic device. The apparatus includes an AC-to-DC power supply that receives an external AC voltage supply and outputs a DC voltage to the electronic device. The power supply includes a bridge rectifier that rectifies the AC voltage from the external AC voltage supply, a boost power factor correction (PFC) converter that boosts the rectified voltage, and a line isolated DC-to-DC converter that changes the boosted voltage to the operating voltage range of the electronic device. The apparatus also includes an uninterruptible power supply (UPS) subsystem that contains, a controller that monitors the external AC voltage supply for interruptions, and a high voltage isolated DC-to-DC (HVDC) converter that supplies high voltage DC power directly to the PFC converter if the controller detects an interruption in the external AC voltage supply.
US2008/179956A1 discloses an uninterruptible power supply for home/office networking and communication system (UPS) comprising: (i) an AC-DC converter, (ii) a battery charger, (iii) a rechargeable battery array, (iv) a control circuit, and (v) a plurality of DC-DC voltage converters/voltage controllers, wherein, in operation, when an AC power supply is available, the UPS provides a plurality of DC voltage outputs to a plurality of loads Li, through the AC-DC converter, the control circuit, and the plurality of the DC-DC voltage converters/voltage controllers, and provides continuous DC charge to the rechargeable battery array, and when the AC power supply becomes unavailable, the control circuit detects the unavailability of the AC power supply, the UPS provides a plurality of DC voltage outputs to the plurality of loads Li, through an DC supply voltage of the rechargeable battery array, the control circuit, and the plurality of the DC-DC voltage converters/voltage controllers.
US2002071292A1 A provides a power supply with: an AC/DC converter which receives AC power, converts the AC power into DC power, and outputs the DC power; a DC/DC converter which receives the DC power from the AC/DC converter, and controls a level of an output voltage of the DC/DC converter to be equal to a level of a voltage to be used by a load while the DC/DC converter supplies the output voltage to the load; a DC converter which is connected to an input of the DC/DC converter; and a DC power storage means which supplies electric power to the DC/DC converter through the DC converter.
US2015115711A1 discloses a Multi-level data center consolidated power. One or more controllers communicate with one or more power supplies and sensors to adapt to dynamic load requirements and to distribute DC-power efficiently across multiple IT racks. The distributed DC-power includes one or more DC-voltages. Batteries can be temporarily switched into a power supply circuit to supplement the power supply during spikes in power load demand while a controller reconfigures power supplies to meet the new demand. In embodiments, one or more DC-to-AC converters handle legacy power loads. The DC-to-AC converters are modular and are paralleled for redundancy. The AC-power is synchronized for correct power flow control. The one or more controllers communicate with the one or more AC-power supplies to dynamically allocate AC-power from the DC-to-AC converters to the multiple IT racks.

Therefore, how to design an uninterruptible power supply with DC output to solve the technical problems above is an important subject studied by the inventors and proposed in the present disclosure.

### SUMMARY

An objective of the present disclosure is to provide an uninterruptible power supply with DC output, it may solve the technical problem with each of the output ports cannot arbitrarily adjust the output-related electrical value according to the use's requirement, and solve the technical problem with cannot protect the safety of the plurality of loads connected to the uninterruptible power supply with DC output in the event of sudden abnormal supply situation of the mains. Achieving the objective of reducing the size, reducing the production cost, and avoiding hardware damage and data loss due to sudden power interruption.

In order to achieve the objective, an uninterruptible power supply with DC output includes an AC-to-DC conversion circuit coupled to an AC power source for outputting a first DC power source, a charging and discharging module for outputting a second DC power source, at least one power module coupled to the AC-to-DC conversion circuit and the charging and discharging module, and to receive one of the first DC power source and the second DC power source, and a user operation interface disposed between the at least one power module and at least one load, and the user operation interface includes at least one operation unit, wherein the power required for each load is selected by each operation unit so that at least one power module uninterruptedly supplies power to each load.

In order to achieve the objective, another uninterruptible power supply with DC output includes a power factor correction stage circuit coupled to an AC power source for outputting a first DC power source, a charging and discharging module for outputting a second DC power source, at least one power module coupled to the power factor correction stage circuit to receive one of the first DC power source and the second DC power source, and a user operation interface disposed between the at least one power module and at least one load, and the user operation interface includes at least one operation unit, wherein the power required for each load is selected by each operation unit so that at least one power module uninterruptedly supplies power to each load.

During use of any one of the uninterruptible power supply with DC output of the present disclosure, as the AC power source is normal, at least one power module receives the first DC power source, as the AC power source is abnormal, at least one power module receives the second DC power source, in addition, since the user may select the power required for each load through at least one operation unit (which may be a dip switch, a knob, etc.), so the at least one power module converts one of the first DC power source and the second DC power source, and uninterruptedly supplies power to at least one load.

### BRIEF DESCRIPTION OF DRAWING

FIG. 1 is a structural diagram of an uninterruptible power supply with DC output according to a first embodiment of the present disclosure,
FIG. 2A to FIG. 2F are circuit diagrams of an AC-to-DC conversion circuit of the uninterruptible power supply with DC output according to the present disclosure,
FIG. 3A is a circuit block diagram showing a configuration of the AC-to-DC conversion circuit and a charging and discharging module of the uninterruptible power supply with DC output according to a second embodiment of the present disclosure,
FIG. 3B is a circuit block diagram showing a configuration of the AC-to-DC conversion circuit and the charging and discharging module of the uninterruptible power supply with DC output according to a third embodiment of the present disclosure,
FIG. 4A to FIG. 4C are circuit block diagrams showing the configuration of power modules and operation units of the uninterruptible power supply with DC output according to the first embodiment of the present disclosure,
FIG. 5 is a structural diagram of the uninterruptible power supply with DC output according to a fourth embodiment of the present disclosure,
FIG. 6A to FIG. 6B are circuit diagrams of a power factor correction stage circuit of the uninterruptible power supply with DC output according to the present disclosure,
FIG. 7 is a circuit block diagram showing the configuration of the power factor correction stage circuit and the charging and discharging module of the uninterruptible power supply with DC output according to a fifth embodiment of the present disclosure, and
FIG. 8A to FIG. 8C are circuit block diagrams showing the configuration of the power modules and the operation units of the uninterruptible power supply with DC output according to the fourth embodiment of the present disclosure.

### DETAILED DESCRIPTION

The embodiments of the present disclosure are described by way of specific examples, and those skilled in the art may readily appreciate the other advantages and functions of the present disclosure.

It should be understood that the structures, the proportions, the sizes, the number of components, and the like in the drawings are only used to cope with the contents disclosed in the specification for understanding and reading by those skilled in the art, and it is not intended to limit the conditions that may be implemented in the present disclosure, and thus is not technically significant.

The technical content and detailed description of the present disclosure will be described below in conjunction with the drawings.

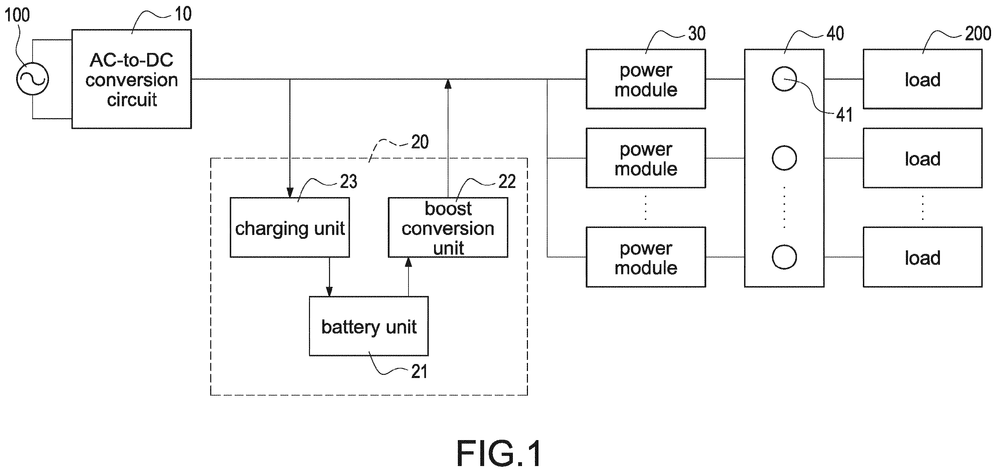

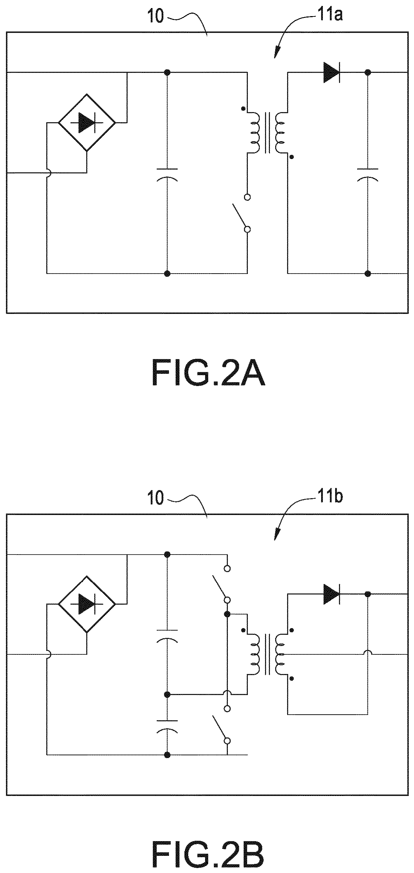

Referring to FIG. 1 to FIG. 2F. FIG. 1 is a structural diagram of an uninterruptible power supply with DC output according to a first embodiment of the present disclosure. FIG. 2A to FIG. 2F are circuit diagrams of an AC-to-DC conversion circuit of the uninterruptible power supply with DC output according to the present disclosure.

As shown in FIG. 1, the uninterruptible power supply with DC output according to the first embodiment of the present disclosure includes an AC-to-DC conversion circuit 10, a charging and discharging module 20, at least one power module 30, and a user operation interface 40.

The AC-to-DC conversion circuit 10 is coupled to an AC power source 100, and converts the AC power source 100 to output a first DC power source (not shown). The charging and discharging module 20 is coupled to the AC-to-DC conversion circuit 10 and outputs a second DC power source (not shown).

The charging and discharging module 20 includes a battery unit 21, a boost conversion unit 22, and a charging unit 23. The battery unit 21 may be a rechargeable battery storage device such as a lithium battery, a nickel-hydrogen battery, a hydrogen-oxygen battery, or a lead-acid battery, but the present disclosure is not limited thereto. The boost conversion unit 22 is coupled to the battery unit 21 and the at least one power module 30. In the first embodiment of the present disclosure, the charging unit 23 is coupled to the battery unit 21 and a DC output side of the AC-to-DC conversion circuit 10 (as shown in FIG. 1). When the battery unit 21 is charged, the charging unit 23 receives the first DC power source outputted from the AC-to-DC conversion circuit 10 and converts it into a voltage that is suitable for charging the battery unit 21.

At least one power module 30 is coupled to the AC-to-DC conversion circuit 10 and the charging and discharging module 20, and receives one of the first DC power source and the second DC power source. Further, when the AC power source 100 is normal, each power module 30 receives the first DC power source, and converts the first DC power source to provide power required for each load 200. When the AC power source 100 is abnormal, the battery unit 21 outputs electric energy, and a output voltage of the battery unit 21 is boosted by the boost conversion unit 22 to provide the second DC power source, so that each power module 30 receives the second DC power source and converts the second DC power source to provide the power required for each load 200 to uninterruptedly supply power to each load 200.

The user operation interface 40 is coupled to the at least one power module 30 and the at least one load 200. The user operation interface 40 provides at least one operation unit 41 to control the coupling (ON) or decoupling (OFF) between the power modules 30 and the loads 200, and select the power required for each load 200. The operation unit 4 is an adjustable structure such as a dial switch, a knob, etc. Therefore, the user may arbitrarily match different numbers of loads, adjust the power value required for each load 200, or according to the user's requirement or each load 200 to arbitrarily adjust at least one relevant electrical value (such as at least one of a voltage value and a current value), then output it by the power module 30. In the first embodiment of the present disclosure, each operation unit 41 may correspondingly control one power module 30, or each operation unit 41 may simultaneously control two or more than two power modules 30 to meet high power demand of the loads 200. Each power module 30 converts one of the first DC power source and the second DC power source to uninterruptedly supply power to each load 200.

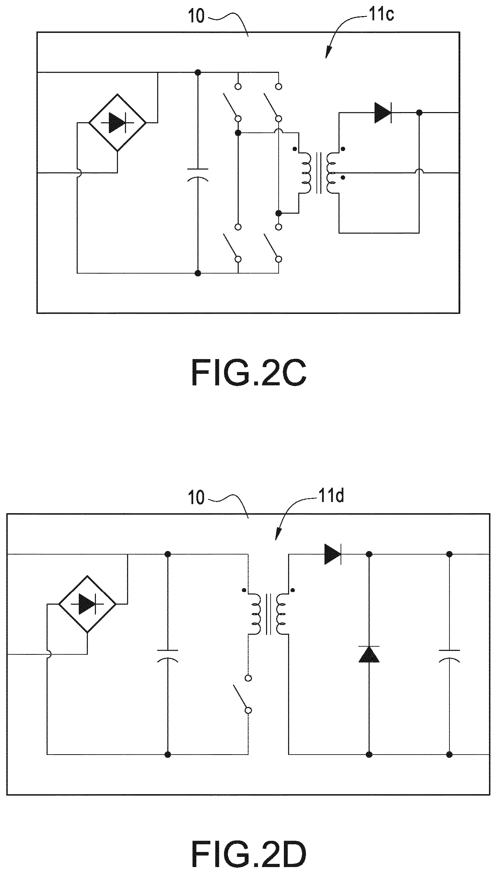

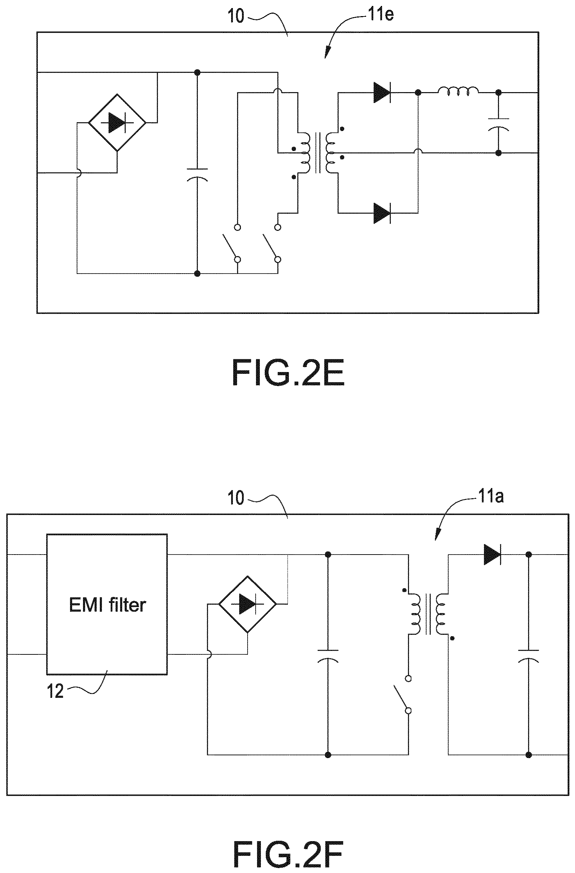

As shown in FIG. 2A to FIG. 2F, in the uninterruptible power supply with DC output according to the first embodiment of the present disclosure, the AC-to-DC conversion circuit 10 may include an isolated topology structure coupled to the AC power source 100. In the first embodiment of the present disclosure, the isolated topology structure may be one of a flyback circuit 11a (as shown in FIG. 2A), a half-bridge circuit 11b (as shown in FIG. 2B), a full-bridge circuit 11c (shown in FIG. 2C), a forward circuit 11d (shown in FIG. 2D), and a push-pull circuit 11e (shown in FIG. 2E). Further, the AC-to-DC conversion circuit 10 may further include an electro-magnetic interference (EMI) filter 12 (shown in FIG. 2F), which may be combined with any of the above-mentioned isolated topology structures to form the AC-to-DC conversion circuit 10.

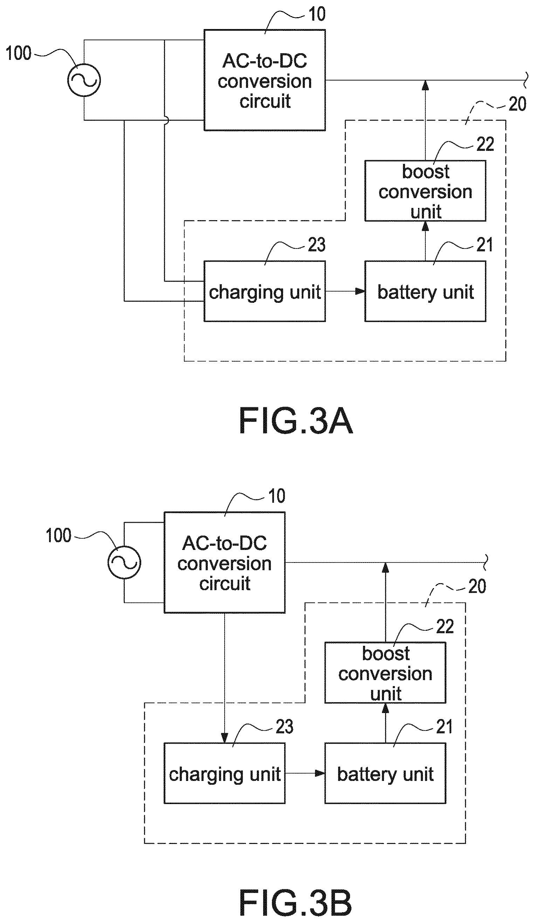

Referring to FIG. 3A and FIG. 3B. FIG. 3A is a circuit block diagram showing a configuration of an AC-to-DC conversion circuit 10 and a charging and discharging module 20 of the uninterruptible power supply with DC output according to a second embodiment of the present disclosure. FIG. 3B is a circuit block diagram showing a configuration of the AC-to-DC conversion circuit 10 and the charging and discharging module 20 of the uninterruptible power supply with DC output according to a third embodiment of the present disclosure.

As shown in FIG. 3A, the second embodiment of the uninterruptible power supply with DC output of the present disclosure is substantially the same as the first embodiment except that a configuration relationship between the AC-to-DC conversion circuit 10 and the charging and discharging module 20 is different. In the second embodiment, the charging unit 23 is coupled to the battery unit 21 and an AC input side of the AC-to-DC conversion circuit 10 (as shown in FIG. 3A, the charging unit 23 is coupled to the AC power source 100). When the battery unit 21 is charged, the charging unit 23 receives the AC power source 100 and converts it into a voltage that is suitable for charging the battery unit 21. Moreover, when the AC power source 100 is abnormal, the battery unit 21 outputs electric energy, and the output voltage of the battery unit 21 is boosted by the boost conversion unit 22 to provide the second DC power source. Therefore, each power module 30 receives the second DC power source, and converts the second DC power source to provide the power required for each load 200 to uninterruptedly supply power to each load 200.

As shown in FIG. 3B, the third embodiment of the uninterruptible power supply with DC output of the present disclosure is substantially the same as the first embodiment, except that a configuration relationship between the AC-to-DC conversion circuit 10 and the charging and discharging module 20 is different. In the third embodiment, the charging unit 23 is coupled to the battery unit 21 and an internal DC side of the AC-to-DC conversion circuit 10 (as shown in FIG. 3B, the charging unit 23 is coupled to a position between an AC input side and a DC output side of the AC-to-DC conversion circuit 10). For example, the AC-to-DC conversion circuit 10 shown in FIG. 2A is a flyback circuit 11a, the charging unit 23 may be coupled to an output side of the full-wave rectifying circuit (i.e., an input side of the flyback circuit 11a) to implement that the charging unit 23 is coupled to the internal DC side of the AC-to-DC conversion circuit 10.

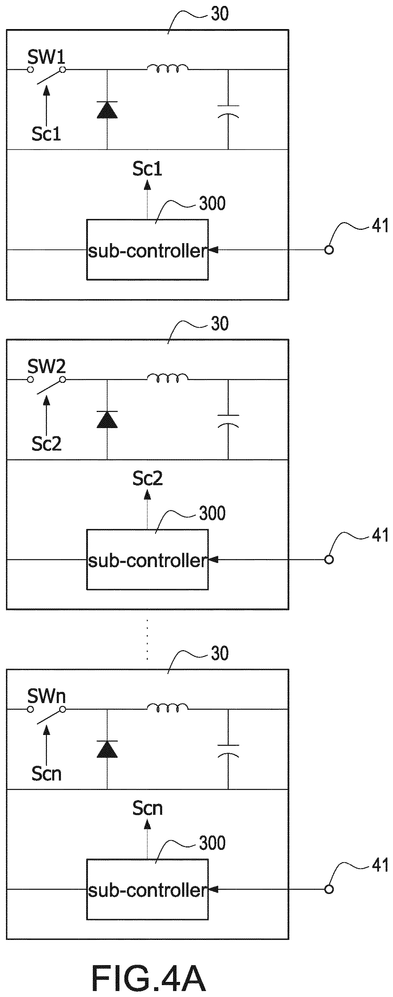

Please refer to FIG. 4A to FIG. 4C, which are circuit block diagrams showing the configuration of the power modules 30 and the operation units 41 of the uninterruptible power supply with DC output according to the first embodiment of the present disclosure. In the first embodiment of the present disclosure, each power module 30 includes a buck circuit with a power switch (SW1, SW2, ..., SWn as shown in FIG. 4A). The buck circuit receives one of the first DC power source and the second DC power source, and converts it to control the output voltage of each power module 30 to provide the power required for each load 200. In FIG. 4A to FIG. 4C, each operation unit 41 may correspondingly control one power module 30, or each operation unit 41 may simultaneously control two or more than two power modules 30. Further, each operation unit 41 may control each power switch (SW1, SW2, ..., SWn) through one sub-controller 300, and further each operation unit 41 may simultaneously control two or more than two power switches (SW1, SW2 ..., SWn) through two or more than two sub-controllers 300.

As shown in FIG. 4A, in the first embodiment of the present disclosure, the first configuration relationship between the power modules 30 and the operation units 41 is: each operation unit 41 controls at least one power switch (SW1, SW2, ..., SWn) through one sub-controller 300 included in at least one power module 30. For example, one sub-controller 300 outputs a control signal Sc1 to control the power switch SW1, another sub-controller 300 outputs a control signal Sc2 to control the power switch SW2, and further another sub-controller 300 outputs a control signal Scn to control the power switch SWn. The control signals Sc1-Scn may be pulse width modulation (PWM) control signals, and a duty cycle of each power switch (SW1, SW2, ..., SWn) is controlled to control the output voltage of each power module 30. Each of the power switches (SW1, SW2, ..., SWn) is correspondingly coupled to each of the sub-controllers 300, and each of the sub-controllers 300 is communicatively coupled to each other to provide a control communication between the power switches (SW1, SW2, ..., SWn). The control communication may control the communication mode of power distribution between the power modules 30 according to the power required for each load 200.

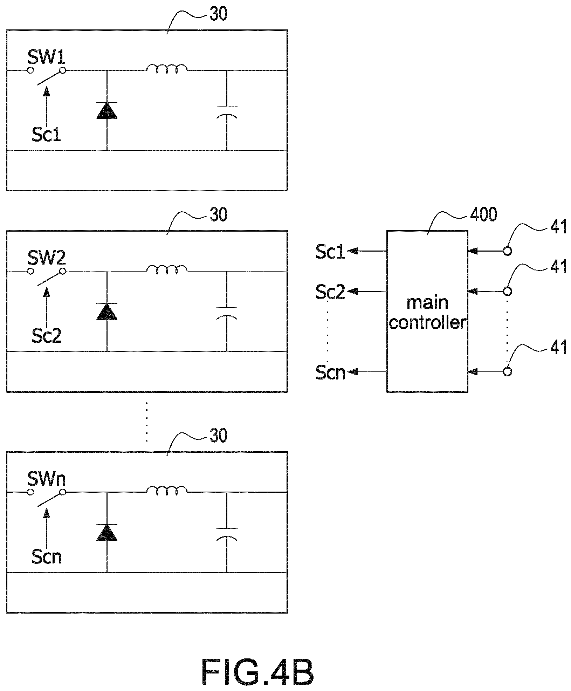

As shown in FIG. 4B, in the first embodiment of the present disclosure, the second configuration relationship between the power modules 30 and the operation units 41 is: each operation unit 41 controls at least one power switch (SW1, SW2, ..., SWn) through a main controller 400. For example, the main controller 400 outputs the control signal Sc1 to control the power switch SW1, outputs the control signal Sc2 to control the power switch SW2, and outputs the control signal Scn to control the power switch SWn. Similarly, the control signals Sc1-Scn may be pulse width modulation (PWM) control signals, and the duty cycle of each power switch (SW1, SW2, ..., SWn) is controlled to control the output voltage of each power module 30. The power switches (SW1, SW2, ..., SWn) are respectively coupled to the main controller 400, and the main controller 400 provides a control communication between the power switches (SW1, SW2, ..., SWn). The control communication may control the communication mode of power distribution between the power modules 30 according to the power required for each load 200.

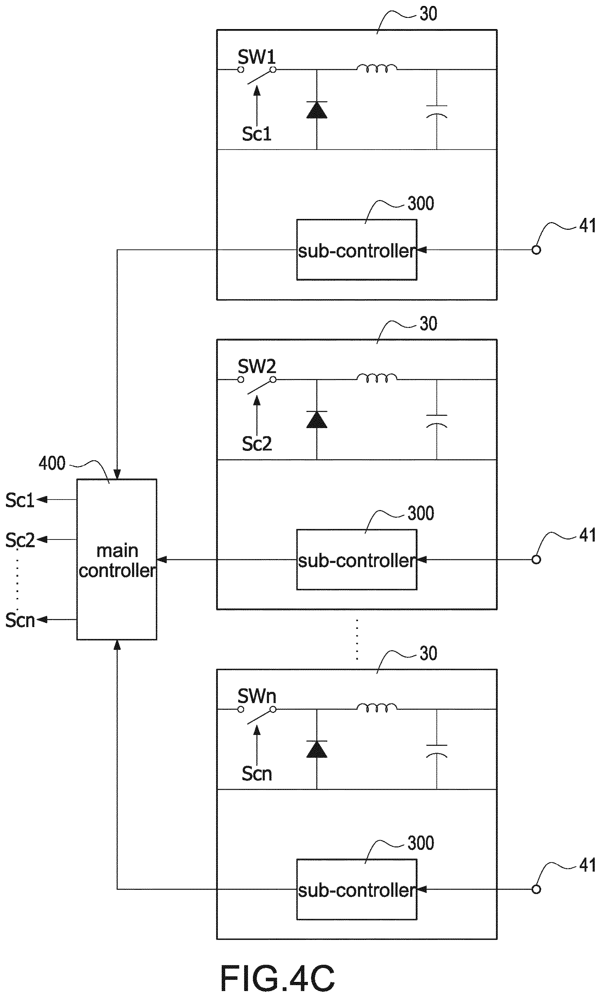

As shown in FIG. 4C, in the first embodiment of the present disclosure, the third configuration relationship between the power modules 30 and the operation units 41 is: each operation unit 41 controls at least one power switch (SW1, SW2, ..., SWn) through the main controller 400 and the sub-controllers 300 included in at least one power module 30. For example, at least one sub-controller 300 receives information of the power required selected by each operation unit 41 to each load 200, and then transmits the information of the required power of each load 200 to the main controller 400. The main controller 400 outputs control signal Sc1 to control the power switch SW1, outputs the control signal Sc2 to control the power switch SW2, and outputs the control signal Scn to control the power switch SWn according to the received information of the required power. Similarly, the control signals Sc1-Scn may be pulse width modulation (PWM) control signals, and the duty cycle of each power switch (SW1, SW2, ..., SWn) is controlled to control the output voltage of each power module 30. The main controller 400 is coupled to each sub-controller 300 and each of the power switches (SW1, SW2, ..., SWn), and the main controller 400 provides a control communication between the power switches (SW1, SW2, ..., SWn). The control communication may control the communication mode of power distribution between the power modules 30 according to the power required for each load 200.

In order to facilitate the description of the operation principle of the uninterruptible power supply with DC output according to the first embodiment of the present disclosure, the following description will be made by exemplified numerical values, but the present disclosure is not limited thereto. Taking FIG. 1 as an example, when the AC power source 100 is normal, the AC-to-DC conversion circuit 10 converts the voltage of the AC power source 100 (for example, 110 volts), and boosts it to 400 DCV as the first DC power source, so that each power module 30 may receive the first DC power source to supply the power required for each load 200. When the battery unit 21 is charged, the charging unit 23 converts the voltage of the first DC power source (400 DCV, and the available rated power is 2400 W) into a charging voltage of the battery unit 21 (for example, 48 DCV) for charging the battery unit 21. When the AC power source 100 is abnormal, the output voltage of the battery unit 21 is converted by the boost conversion unit 22 and boosted to 400 DCV as a second DC power source. Therefore, each power module 30 may receive the second DC power source to supply power required for each load 200 to uninterruptedly supply power to each load 200.

Furthermore, when the user selects the power required for a first load 200 through the operation unit 41 (which may be a dip switch, a knob, etc.). For example, the supply voltage of the first load 200 (for example, 60 DCV) and/or the supply power (for example, 300 W) are selected. At this time, with reference to one of FIG. 4A to FIG. 4C, the main controller 400 and/or the sub-controller 300 receives the information of the power required for the first load 200 (i.e., a DC supply voltage is 60 V and/or a supply power is 300 W). Therefore, the duty cycle of the power switch SW1 of a first power module 30 is controlled such that the voltage output of the first power module 30 is 60 V and/or the output current thereof is 5 amps to supply the power required for the first load 200. Further, it is assumed that the maximum output power of the first power module 30 is only 150 W. When one operation unit 41 is adjusted to the required 300 W value corresponding to the first load 200, the main controller 400 and/or the sub-controller 300 may simultaneously control the first power module 30 (150 W) and the second power module 30 (150 W) to supply power required for the first load 200 at the same time according to the required power selected by the operation unit 41. Thus, the power required for the first load 200 (300 W) is met. However, the quantity relationship among the operation units 41, the power modules 30, and the loads 200 is not limited thereto.

Furthermore, when the number of the loads 200 is plural, the main controller 400 and/or the sub-controller 300 receive the information of the power required for each load 200, afterward controlling the duty cycle of the power switches (SW1, SW2, ..., SWn) of the power modules 30, thereby supplying the voltage and/or power required for each of the selected loads 200.

Further, if the sum of the power supplies required for each selected load 200 exceeds the rated power supplied by the AC-to-DC conversion circuit 10, it may be known that the information of the supply power required for each load 200 through the communication between the sub-controllers 300 (as shown in FIG. 4A), integrated by the main controller 400 (as shown in FIG. 4B), or integrated by the sub-controllers 300 with the main controller 400 (as shown in FIG. 4C). Thereby, the duty cycle of the power switches (SW1, SW2, ..., SWn) of the corresponding power modules 30 may be controlled to proportionally reduce the supply power so as to continuously supply power to each load 200. Alternatively, the duty cycle of the power switches (SW1, SW2, ..., SWn) of the corresponding power modules 30 may be controlled according to the priority (the high and low) of supplying power. It may ensure the load 200 with higher priority of supplying power can obtain the required power supply, afterward, the remaining loads 200 with lower priority of supplying power can obtain part of the required power supply according to the high or low power required to continuously supply power to each load 200.

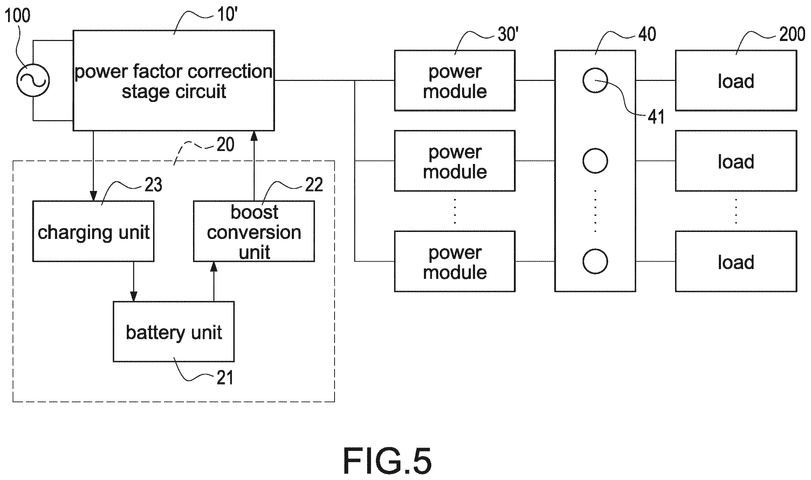

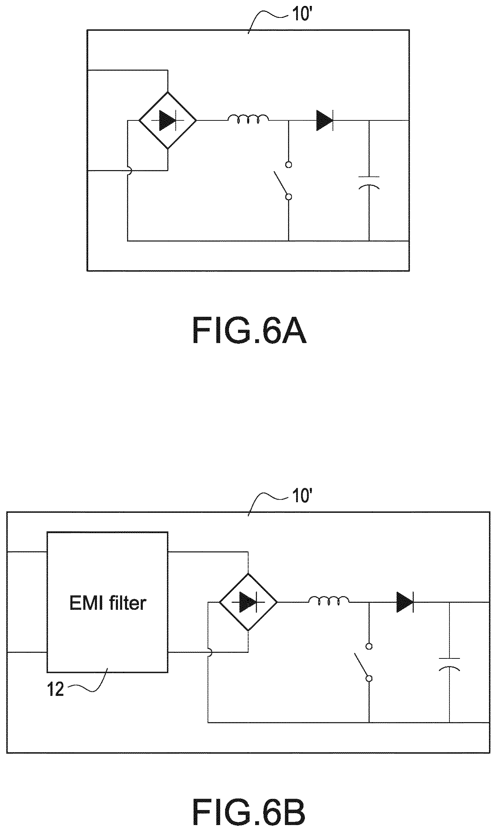

Please refer to FIG. 5 to FIG. 6B. FIG. 5 is a structural diagram of the uninterruptible power supply with DC output according to a fourth embodiment of the present disclosure, and FIG. 6A to FIG. 6B are circuit diagrams of a power factor correction stage circuit of the uninterruptible power supply with DC output according to the present disclosure.

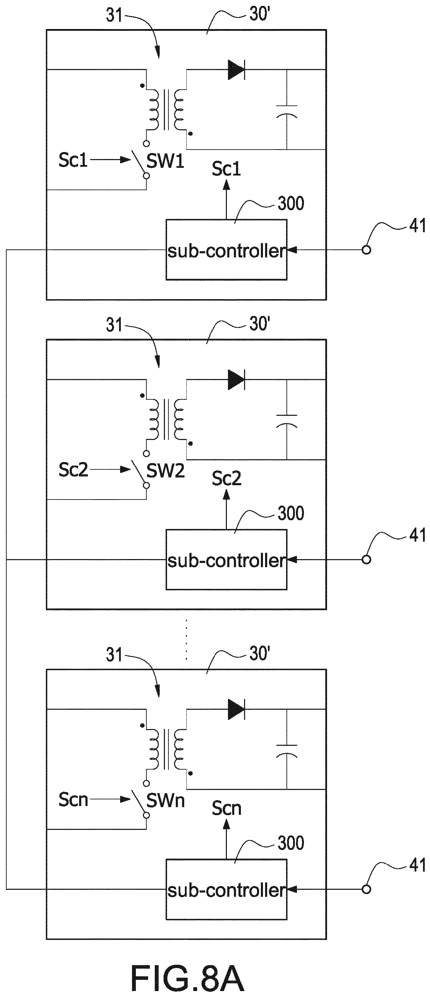

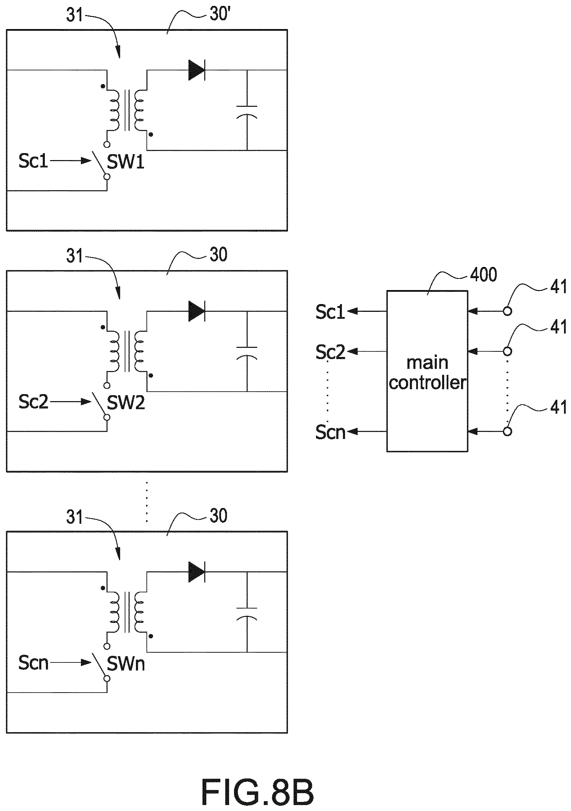

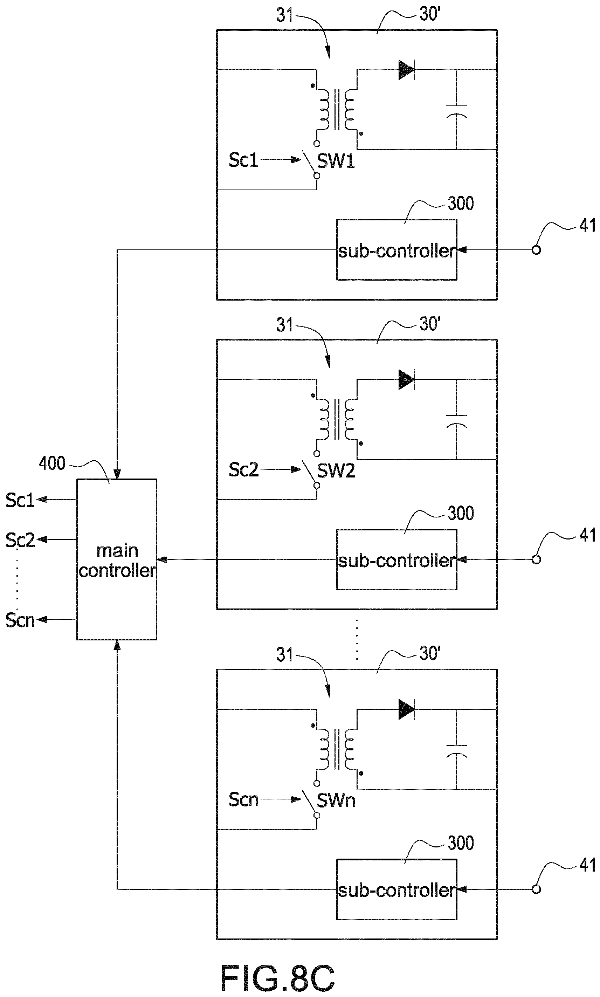

As shown in FIG. 5, the fourth embodiment of the uninterruptible power supply with DC output of the present disclosure is substantially the same as the foregoing first embodiment except that the AC-to-DC conversion circuit 10 with the isolated topology structure 31 in the first embodiment is replaced by a power factor correction stage circuit 10' with a non-isolated topology structure. Each power module 30' in the fourth embodiment further includes an isolated topology structure 31 (see FIG. 8A to FIG. 8C in comparison with each power module 30 in the first embodiment).

In the fourth embodiment of the present disclosure, the charging unit 23 of the charging and discharging module 20 is coupled to the battery unit 21 and an internal DC side of the power factor correction stage circuit 10' (as shown in FIG. 5, the charging unit 23 is coupled between the AC input side and the DC output side of the power factor correction stage circuit 10'). For example, the power factor correction stage circuit 10' shown in FIG. 6A is a boost power factor correction stage circuit, and the charging unit 23 may be coupled to an output side of the full-wave rectifying circuit (i.e., the input side of a boost converter). The solution that the charging unit 23 is coupled to the internal DC side of the power factor correction stage circuit 10' is implemented.

Please refer to FIG. 6A to FIG. 6B, which are circuit diagrams of a power factor correction stage circuit of the uninterruptible power supply with DC output according to the present disclosure. In the fourth embodiment of the uninterruptible power supply with DC output of the present disclosure, the power factor correction stage circuit 10' may be a boost power factor correction stage circuit comprising a full-wave rectifying circuit and a boost converter (as shown in FIG. 6A). Alternatively, the power factor correction stage circuit 10' may also be a boost power factor correction stage circuit further comprising the EMI filter 12 (as shown in FIG. 6B).

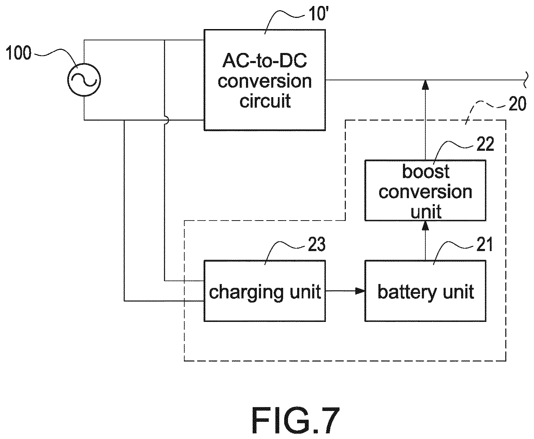

Referring to FIG. 7, which is a circuit block diagram showing the configuration of the power factor correction stage circuit and the charging and discharging module of the uninterruptible power supply with DC output according to a fifth embodiment of the present disclosure. The fifth embodiment of the present disclosure is substantially the same as the foregoing fourth embodiment except that the charging unit 23 of the charging and discharging module 20 is coupled to the battery unit 21 and the AC input side of the power factor correction stage circuit 10' (as shown in the FIG. 7, the charging unit 23 is coupled to the AC power source 100). When the battery unit 21 is charged, the charging unit 23 receives the AC power source 100 and converts it into a voltage that is suitable for charging the battery unit 21. When the AC power source 100 is abnormal, the battery unit 21 outputs electric energy, and the output voltage of the battery unit 21 is boosted by the boost conversion unit 22 to provide the second DC power source. Therefore, each power module 30 receives the second DC power source and converts the second DC power source to provide the power required for each load 200 to uninterruptedly supply power to each load 200.

Please refer to FIG. 8A to FIG. 8C, which are circuit block diagrams showing the configuration of the power modules and the operation units of the uninterruptible power supply with DC output according to the fourth embodiment of the present disclosure. The control manners between the operation unit 41 and the power module 30 is similar to that in the first embodiment described above, and the difference is that each power module 30' in the fourth embodiment further includes an isolated topology structure 31 compared to each power module 30 in the first embodiment. For other parts, refer to the corresponding description of the first embodiment, and details are not described herein again.

During use of any one of the uninterruptible power supply with DC output of the present disclosure, as the AC power source 100 is normal, at least one power module 30 receives the first DC power source, and converts the first DC power source to provide power required for at least one load 200; as the AC power source 100 is abnormal, at least one power module 30 receives the second DC power source, and converts the second DC power source to provide the power required for at least one load 200. In addition, since the user may select the power required for each load 200 through at least one operation unit 41 (which may be a dip switch, a knob, etc.), so the at least one power module 30, 30' converts one of the first DC power source and the second DC power source, and provides uninterrupted power to at least one load 200.

To this end, the user can arbitrarily match the different number of loads 200, adjust the power value required for each load 200, arbitrarily adjust the relevant electrical values (for example, at least one of a voltage value and a current value) outputted by the at least one power module 30 according to the user's needs or the requirements of each load 200, and it is possible to protect the safety of the plurality of loads 200 connected to it in the event of sudden abnormal supply situation of the mains, thereby achieving the objectives of reducing the size, reducing the production cost, and avoiding hardware damage and data loss due to sudden power interruption.

## Claims

1. An uninterruptible power supply with DC output comprising:
an AC-to-DC conversion circuit (10) coupled to an AC power source (100) and configured for outputting a first DC power source,
a charging and discharging module (20) configured for outputting a second DC power source,
a plurality of power modules (30) coupled to the AC-to-DC conversion circuit (10) and the charging and discharging module (20), and configured to receive one of the first DC power source and the second DC power source, and
a user operation interface (40) disposed between the power modules (30) and a plurality of loads (200), and the user operation interface (40) comprising at least one operation unit (41),
wherein the power required for each load (200) is selected by each operation unit (41) so that the power modules (30) uninterruptedly supplies power to the loads (200), each operation unit (41) is a manually adjustable structural unit, and each operation unit (41) is communicatively coupled to each other through a main controller (400) and/or a sub-controller (300) included in each power module (30), so as to obtain an information of the power required for each load (200), and the main controller (400) and/or sub-controllers (300) control a duty cycle of a power switch (SW1, SW2~SWn) of each power module (30) by proportionally reducing a supply power, or the main controller (400) and/or sub-controllers (300) control each duty cycle according to a priority of the supply power, so as to control a power distribution between the power modules (30) when a sum of a power supplies required for the loads (200) exceeds a rated power supplied by the AC-to-DC conversion circuit (10).

2. The uninterruptible power supply with DC output in claim 1, wherein as the AC power source (100) is normal, each of the power modules (30) receives the first DC power source, and as the AC power source (100) is abnormal, each of the power modules (30) receives the second DC power source.

3. The uninterruptible power supply with DC output in claim 1, wherein the AC-to-DC conversion circuit (10) comprises an isolated topology structure (31) coupled to the AC power source (100).

4. The uninterruptible power supply with DC output in claim 1, wherein the charging and discharging module (20) comprises:
a battery unit (21),
a boost conversion unit (22) coupled to the battery unit (21) and the power modules (30), and
a charging unit (23) is coupled to the battery unit (21) and one of an AC input side, a DC output side, and an internal DC side of the AC-to-DC conversion circuit (10).

5. The uninterruptible power supply with DC output in claim 1, wherein each of the power modules (30) includes a buck circuit with the power switch (SW1, SW2~SWn), the buck circuit receives one of the first DC power source and the second DC power source, and controls an output voltage of each power module (30).

6. The uninterruptible power supply with DC output in claim 5, wherein each of the power switches (SW1, SW2~SWn) is coupled to the main controller (400) or each of the sub-controllers (300), and the main controller (400) or each of the sub-controllers (300) provides a control communication between each of the power switches (SW1, SW2~SWn).

7. The uninterruptible power supply with DC output in claim 5, wherein the main controller (400) is coupled to each of the sub-controllers (300) and each of the power switches (SW1, SW2~SWn), and the main controller (400) provides a control communication between each of the power switches (SW1, SW2~SWn).

8. The uninterruptible power supply with DC output in claim 6 or claim 7, wherein the main controller (400) or each of the sub-controllers (300) controls the duty cycle of each of the power switches (SW 1, SW2~SWn) with a pulse width modulation manner, thereby controlling the output voltage of each power module (30).

9. The uninterruptible power supply with DC output in claim 1, wherein the AC-to-DC conversion circuit (10) is a power factor correction stage circuit (10').

10. The uninterruptible power supply with DC output in claim 9, wherein each of the power modules (30') comprises an isolated topology structure (31) coupled to each of the loads (200), and each isolated topology structure (31) has the power switch (SW1, SW2~SWn) coupled to the power factor correction stage circuit (10').

## Patentansprüche

1. Eine unterbrechungsfreie Stromversorgung mit Gleichstromausgang, umfassend:
eine AC/DC-Wandlerschaltung (10), die mit einer Wechselstromquelle (100) gekoppelt und so ausgelegt ist, dass sie eine erste Gleichstromquelle ausgibt,
ein Lade-Entlade-Modul (20), das zur Bereitstellung einer zweiten Gleichstromquelle ausgelegt ist,
mehrere Leistungsmodule (30), die mit der AC/DC-Wandlerschaltung (10) und dem Lade-Entlade-Modul (20) gekoppelt und so ausgelegt sind, dass sie entweder die erste Gleichstromquelle oder die zweite Gleichstromquelle empfangen, und
eine Benutzerbedienschnittstelle (40), die zwischen den Leistungsmodulen (30) und einer Vielzahl von Lasten (200) angeordnet ist, wobei die Benutzerbedienschnittstelle (40) mindestens eine Bedieneinheit (41) umfasst,
wobei die für jede Last (200) erforderliche Leistung von jeder Bedieneinheit (41) so ausgewählt wird, dass die Leistungsmodule (30) die Lasten (200) unterbrechungsfrei mit Leistung versorgen, jede Bedieneinheit (41) eine manuell einstellbare Struktureinheit ist und jede Bedieneinheit (41) über eine Hauptsteuerung (400) und/oder eine Untersteuerung (300), die in jedem Leistungsmodul (30) enthalten ist, miteinander kommuniziert, so , um Informationen über die für jede Last (200) benötigte Leistung zu erhalten, und die Hauptsteuerung (400) und/oder die Untersteuerungen (300) einen Arbeitszyklus eines Leistungsschalters (SW1, SW2~SWn) jedes Leistungsmoduls (30) steuern, indem sie die Versorgungsleistung proportional reduzieren, oder die Hauptsteuerung (400) und/oder die Untersteuerungen (300) steuern jeden Arbeitszyklus entsprechend einer Priorität der Versorgungsleistung, um die Leistungsverteilung zwischen den Leistungsmodulen (30) zu steuern, wenn die Summe der für die Lasten (200) erforderlichen Versorgungsleistungen die von der AC/DC-Wandlerschaltung (10) gelieferte Nennleistung überschreitet.

2. Die unterbrechungsfreie Stromversorgung mit Gleichstromausgang nach Anspruch 1, wobei bei normalem Betrieb der Wechselstromquelle (100) jedes der Leistungsmodule (30) die erste Gleichstromquelle erhält und bei Störung der Wechselstromquelle (100) jedes der Leistungsmodule (30) die zweite Gleichstromquelle erhält.

3. Die unterbrechungsfreie Stromversorgung mit Gleichstromausgang nach Anspruch 1, wobei die AC/DC-Wandlerschaltung (10) eine isolierte Topologiestruktur (31) umfasst, die mit der Wechselstromquelle (100) gekoppelt ist.

4. Die unterbrechungsfreie Stromversorgung mit Gleichstromausgang nach Anspruch 1, wobei das Lade-Entlade-Modul (20) umfasst:
eine Batterieeinheit (21),
eine mit der Batterieeinheit (21) und den Leistungsmodulen (30) gekoppelte Aufwärtswandlereinheit (22) sowie
eine Ladeeinheit (23), die mit der Batterieeinheit (21) und entweder der Wechselstrom-Eingangsseite, der Gleichstrom-Ausgangsseite oder der internen Gleichstromseite der AC/DC-Wandlerschaltung (10) gekoppelt ist.

5. Die unterbrechungsfreie Stromversorgung mit Gleichstromausgang nach Anspruch 1, wobei jedes der Leistungsmodule (30) eine Abwärtswandlerschaltung mit dem Leistungsschalter (SW1, SW2~SWn) umfasst, wobei die Abwärtswandlerschaltung entweder die erste Gleichstromquelle oder die zweite Gleichstromquelle aufnimmt und eine Ausgangsspannung jedes Leistungsmoduls (30) steuert.

6. Die unterbrechungsfreie Stromversorgung mit Gleichstromausgang nach Anspruch 5, wobei jeder der Leistungsschalter (SW1, SW2~SWn) mit der Hauptsteuerung (400) oder mit jeder der -Untersteuerungen (300) gekoppelt ist, und die Hauptsteuerung (400) oder jede der Untersteuerungen (300) eine Steuerkommunikation zwischen jedem der Leistungsschalter (SW1, SW2~SWn) bereitstellt.

7. Die unterbrechungsfreie Stromversorgung mit Gleichstromausgang nach Anspruch 5, wobei die Hauptsteuerung (400) mit jeder der Untersteuerungen (300) und jedem der Leistungsschalter (SW1, SW2~SWn) gekoppelt ist und die Hauptsteuerung (400) eine Steuerkommunikation zwischen jedem der Leistungsschalter (SW1, SW2~SWn) bereitstellt.

8. Die unterbrechungsfreie Stromversorgung mit Gleichstromausgang nach Anspruch 6 oder Anspruch 7, wobei die Hauptsteuerung (400) oder jede der Untersteuerungen (300) den Tastgrad jedes der Leistungsschalter (SW1, SW2 bis SWn) mittels Pulsweitenmodulation steuert und dadurch die Ausgangsspannung jedes Leistungsmoduls (30) regelt.

9. Die unterbrechungsfreie Stromversorgung mit Gleichstromausgang nach Anspruch 1, wobei die AC/DC-Wandlerschaltung (10) eine Leistungsfaktorkorrekturstufenschaltung (10') ist.

10. Die unterbrechungsfreie Stromversorgung mit Gleichstromausgang nach Anspruch 9, wobei jedes der Leistungsmodule (30') eine isolierte Topologiestruktur (31) umfasst, die mit jeder der Lasten (200) gekoppelt ist, und jede isolierte Topologiestruktur (31) den Leistungsschalter (SW1, SW2~SWn) aufweist, der mit der Leistungsfaktorkorrekturstufenschaltung (10') gekoppelt ist.

## Revendications

1. Un alimentation électrique sans interruption avec sortie en courant continu, comprenant :
un circuit convertisseur AC/DC (10) couplé à une source de courant alternatif (100) et conçu pour fournir une première source de courant continu,
un module de charge-décharge (20) conçu pour fournir une deuxième Source de courant continu,
plusieurs modules de puissance (30) couplés au Circuit convertisseur AC/DC (10) et au Module de charge-décharge (20), et conçus pour recevoir soit la première Source de courant continu, soit la deuxième Source de courant continu, et
une interface de commande utilisateur (40) disposée entre les modules de puissance (30) et une pluralité de charges (200), l'interface de commande utilisateur (40) comprenant au moins une unité de commande (41),
la puissance requise pour chaque charge (200) étant sélectionnée par chaque Unité de commande (41) de telle sorte que les Modules de puissance (30) alimentent les charges (200) sans interruption, chaque Unité de commande (41) étant une unité de réglage manuel et chaque Unité de commande (41) communiquant avec une Commande principale (400) et/ou une commande secondaire (300) intégrée à chaque module de puissance (30), afin d'obtenir des informations sur la puissance requise pour chaque charge (200), et la Commande principale (400) et/ou les commandes secondaires (300) commandent un cycle de fonctionnement d'un interrupteur de puissance (SW1, SW2~SWn) de chaque module de puissance (30) en réduisant proportionnellement la puissance d'alimentation, ou bien la commande principale (400) et/ou les Commandes secondaires (300) commandent chaque cycle de fonctionnement en fonction d'une priorité de la puissance d'alimentation, afin de réguler la répartition de la puissance entre les modules de puissance (30) lorsque la somme des puissances d'alimentation requises pour les charges (200) dépasse la puissance nominale fournie par le Circuit convertisseur AC/DC (10).

2. L'alimentation électrique sans interruption avec sortie en courant continu selon la revendication 1, dans laquelle, en fonctionnement normal de la Source de courant alternatif (100), chacun des modules de puissance (30) est alimenté par la première Source de courant continu et, en cas de défaillance de la Source de courant alternatif (100), chacun des modules de puissance (30) est alimenté par la deuxième Source de courant continu.

3. L'alimentation électrique sans interruption avec sortie en courant continu selon la revendication 1, dans laquelle le Circuit convertisseur AC/DC (10) comprend une structure topologique isolée (31) couplée à la Source de courant alternatif (100).

4. L'alimentation électrique sans interruption avec sortie en courant continu selon la revendication 1, dans laquelle le Module de charge-décharge (20) comprend :
Unité batterie (21),
une Unité convertisseur élévateur (22) couplée à l'Unité batterie (21) et aux Modules de puissance (30), ainsi que
une unité de charge (23) couplée à l'Unité batterie (21) et soit au côté entrée courant alternatif, soit au côté sortie courant continu, soit au côté courant continu interne du Circuit convertisseur AC/DC (10).

5. L'alimentation électrique sans interruption avec sortie en courant continu selon la revendication 1, dans laquelle chacun des modules de puissance (30) comprend un circuit convertisseur abaisseur avec l'interrupteur de puissance (SW1, SW2~SWn), le circuit convertisseur abaisseur recevant soit la première Source de courant continu, soit la deuxième Source de courant continu, et commandant une tension de sortie de chaque module de puissance (30).

6. L'alimentation électrique sans interruption avec sortie en courant continu selon la revendication 5, dans laquelle chacun des Interrupteurs de puissance (SW1, SW2~SWn) est couplé à la Commande principale (400) ou à chacune des Commandes secondaires (300), et la Commande principale (400) ou chacune des Commandes secondaires (300) assure une communication de commande entre chacun des Interrupteurs de puissance (SW1, SW2~SWn).

7. L'alimentation électrique sans interruption avec sortie en courant continu selon la revendication 5, dans lequel la Commande principale (400) est couplée à chacune des Commandes secondaires (300) et à chacun des Interrupteurs de puissance (SW1, SW2~SWn), et la Commande principale (400) assure une communication de commande entre chacun des Interrupteurs de puissance (SW1, SW2~SWn).

8. L'alimentation électrique sans interruption avec sortie en courant continu selon la revendication 6 ou la revendication 7, dans lequel la Commande principale (400) ou chacune des Commandes secondaires (300) commande le rapport cyclique de chacun des Interrupteurs de puissance (SW1, SW2 à SWn) au moyen d'une Modulation de largeur d'impulsion et régule ainsi la tension de sortie de chaque Module de puissance (30).

9. L'alimentation électrique sans interruption avec sortie en courant continu selon la revendication 1, dans lequel le circuit convertisseur AC/DC (10) est un circuit d'étage de correction du facteur de puissance (10').

10. L'alimentation électrique sans interruption avec sortie en courant continu selon la revendication 9, dans laquelle chacun des modules de puissance (30') comprend une Structure topologique isolée (31) qui est couplée à chacune des charges (200) , et chaque Structure topologique isolée (31) comporte l'Interrupteur de puissance (SW1, SW2~SWn) couplé au Circuit d'étage de correction du facteur de puissance (10').
